# EUROPÄISCHE PATENTSCHRIFT

(11) **EP 3 101 304 B1**
(45) Veröffentlichungstag und Bekanntmachung des Hinweises auf die Patenterteilung: **17.10.2018**
(21) Anmeldenummer: 16172563.5
(22) Anmeldetag: 02.06.2016
(51) Int. Cl.: F16D 65/18, F16D 55/225

(54) **SCHEIBENBREMSE**
DISC BRAKE
FREIN À DISQUE

(30) Priorität: 05.06.2015 DE 102015108890
(43) Veröffentlichungstag der Anmeldung: 07.12.2016
(73) Patentinhaber: BPW Bergische Achsen KG, 51674 Wiehl (DE)
(72) Erfinder: Dowe, Günter, 51588 Nümbrecht (DE); Goyke, Georg, 51588 Nümbrecht (DE); Steffen, Andreas, 53797 Lohmar (DE); Klaas, Thomas, 51590 Reichshof (DE); Abt, Christian, 51643 Gummersbach (DE)
(74) Vertreter: Bungartz Christophersen Partnerschaft mbB Patentanwälte

(56) Entgegenhaltungen:
- DE-A1- 4 416 175
- DE-A1-102012 009 424
- DE-C1- 10 219 148

## Beschreibung

Die Erfindung betrifft eine Scheibenbremse mit einem eine Bremsscheibe und Bremsbeläge zu beiden Seiten der Bremsscheibe übergreifenden Bremssattel und einer in dem Bremssattel angeordneten Zuspanneinrichtung aus einem durch ein Kraftglied antreibbaren Bremshebel, einer zu dem zuspannseitigen Bremsbelag hin arbeitenden, innen in dem Bremssattel geführten Traverse, und einem Schwenklager zwischen dem Bremshebel und der Traverse, wobei die Traverse in Zuspannrichtung betrachtet eine Außenkontur aus Außenflächen, mit denen die Traverse in dem Bremssattel geführt ist, und weiteren Außenflächen aufweist, und der Bremssattel in Zuspannrichtung betrachtet eine Innenkontur aus Innenflächen, an denen die Traverse geführt ist, und weiteren Innenflächen aufweist, wobei die Außenkontur der Traverse und die Innenkontur des Bremssattels bestimmt sind durch eine parallel zu der Achse des Schwenklagers angeordnete erste Haupterstreckungsachse und eine zu dieser rechtwinklig angeordnete zweite Haupterstreckungsachse, wobei die geführten Außenflächen paarweise an der Außenkontur vorhanden sind, indem eine Fläche auf der einen, und die jeweils andere Fläche auf der anderen Seite der Haupterstreckungsachse angeordnet ist, und wobei sich bei montierter Traverse deren gesamte Außenkontur überdeckungsfrei innerhalb der Innenkontur des Bremssattels befindet, hingegen bei um 180 ° um die Zuspannrichtung verdrehter Traverse zumindest eine Außenfläche der Außenkontur über die Innenkontur nach außen vorsteht.

Verwandte Scheibenbremsen sind beispielsweise aus der DE 102 19 148 C1 und der DE 44 16 175 A1 bekannt.

Die Zuspanneinrichtung der Scheibenbremse nach DE 102 19 148 C1 besteht aus einer gegen den inneren Bremsbelag arbeitenden Traverse, einem durch ein Kraftglied antreibbaren Bremshebel und einem Schwenklager zwischen dem Bremshebel und der Traverse. Die Bremse ist mit einer Nachstelleinrichtung versehen, durch welche der im Laufe der Zeit auftretende Bremsverschleiß kompensiert und das Lüftspiel der Bremse korrigiert wird. Zu ihrer Längsführung im Bremssattel ist die Traverse mit parallel zur Bremsenachse angeordneten Führungsflächen versehen, die an entsprechenden Innenflächen des Sattels entlang gleiten. Dabei ist die Umfangskontur der Traverse im Wesentlichen bestimmt durch eine parallel zu der Achse des Schwenklagers angeordnete erste Haupterstreckungsachse, und eine zu dieser rechtwinklig angeordnete zweite Haupterstreckungsachse. Beim Zusammenbau der Scheibenbremse, etwa im Rahmen von Reparaturarbeiten, wird die Traverse von Seiten der Bremsscheibe her in dem Bremssattel montiert, indem die Traverse in den Bremssattel hineingeschoben wird. Dabei ist nicht ausgeschlossen, dass die Traverse nicht in der richtigen Einbaulage, sondern in einer um 180 ° um die Zuspannrichtung bzw. um die Nachstellachse verdrehten Einbaulage in den Bremssattel eingesetzt wird. In diesem Fall ist aber die Funktion der Scheibenbremse nicht sichergestellt, zudem misslingt die anschließende Endmontage der Bremse.

Bei der Scheibenbremse aus der DE 44 16 175 A1 wird dies durch angeschrägte, asymmetrisch angeordnete Führungsflächen an der Traverse gelöst. Zwar wird dadurch ein falscher Einbau bei einer um 180 ° um die Zuspanneinrichtung verdrehter Einbaulage vermieden, jedoch nicht ein Einbau bei umgekehrtem Einbau bezogen auf die Vorder- und Rückseite der Traverse.

Der Erfindung liegt daher die **Aufgabe** zugrunde, durch geeignete konstruktive Maßnahmen die Gefahr von Fehlmontagen während des Einsetzens der Traverse in den Bremssattel zu vermeiden.

Zur **Lösung** dieser Aufgabe wird bei einer Scheibenbremse mit den eingangs angegebenen Merkmalen oder bei einer Traverse gemäß dem Oberbegriff des Anspruchs 6 vorgeschlagen, dass nur bei einem Flächenpaar der geführten Außenflächen dessen beiden Außenflächen einen unterschiedlichen Abstand zu der zwischen ihnen angeordneten Haupterstreckungsachse aufweisen.

Bei einer solcherart gestalteten Scheibenbremse lässt sich, da bei um 180° um die Zuspannrichtung verdrehter Traverse zumindest eine Außenfläche der Traverse über die Innenkontur des Bremssattels hinaus nach außen vorsteht, die Traverse nicht in falscher Drehlage in den Bremssattel einsetzen, nämlich in einer um die Zuspannrichtung verdrehten Lage. Aufgrund der Anordnung und Gestaltung der Außenflächen der Traverse und der diese umgebenden Innenflächen des Bremssattels wird jeder Versuch, die Traverse so einzusetzen, dass zwar deren mit dem Bremshebel korrespondierende Seite zu dem Bremshebel hin weist, aber über Kopf steht, bereits im Ansatz scheitern. Dies ist insbesondere dann wichtig, wenn die Nachstellachse der in dem Bremssattel angeordneten Nachstelleinrichtung gegenüber einer oder gegenüber beiden Haupterstreckungsachsen der Traverse nicht mittig liegt.

Von Vorteil im Hinblick auf eine optimale Kraftübertragung auf die Bremsbeläge der Scheibenbremse ist, wenn die Traverse in Richtung der ersten Haupterstreckungsachse eine größere Ausdehnung aufweist, als in Richtung der zweiten Haupterstreckungsachse.

Vorzugsweise gehören die beiden einen unterschiedlichen Abstand zu der Haupterstreckungsachse aufweisenden Außenflächen zu jener Gruppe von Außenflächen der Traverse, die an der Führung und Abstützung der Traverse beteiligt sind.

Die über die Innenkontur des Bremssattels hinaus nach außen vorstehende Außenfläche der Traverse kann zu der Gruppe der ersten Außenflächen gehören, also zu der Gruppe der die Traverse in dem Bremssattel führenden Flächen.

Vorzugsweise ist die Scheibenbremse mit einer in dem Bremssattel angeordneten Nachstelleinrichtung zum Ausgleich des Lüftspiels zwischen den Bremsbelägen und der Bremsscheibe versehen. In diesem Fall sind die Bestandteile der Nachstelleinrichtung vorzugsweise auf einer Nachstellachse angeordnet, welche rechtwinklig sowohl auf der ersten Haupterstreckungsachse, als auch auf der zweiten Haupterstreckungsachse der Traverse steht.

Im Folgenden ist die Erfindung anhand eines Ausführungsbeispiels der Erfindung unter Bezugnahme auf die Zeichnungen und die darin wiedergegebenen Einzelheiten näher erläutert. Zudem sind weitere Bauformen einer Scheibenbremse beschrieben. Es zeigen:
- Fig. 1: einen Längsschnitt längs der Zuspannrichtung durch den Bremssattel einer erfindungsgemäßen Scheibenbremse in Schiebesattel-Bauweise;
- Fig. 2: einen in Zuspannrichtung betrachteten Querschnitt durch die erfindungsgemäße Scheibenbremse entsprechend der in Fig. 1 eingezeichneten Schnittebene II-II;
- Fig. 3: einen in Zuspannrichtung betrachteten Querschnitt ähnlich der Fig. 2, jedoch bei einer anderen Bauform;
- Fig. 4: einen in Zuspannrichtung betrachteten Querschnitt bei einer weiteren Bauform;
- Fig. 5a: einen in Zuspannrichtung betrachteten Querschnitt bei einer anderen Bauform,
- Fig. 5b: die Gegenstände nach Fig. 5a für den Fall des Versuchs, die Traverse um 180° um die Zuspannrichtung verdreht in den Bremssattel einzusetzen, und
- Fig. 6: einen in Zuspannrichtung betrachteten Querschnitt bei einer weiteren Bauform.

Auf den Zeichnungen dargestellt ist eine Scheibenbremse in der Bauart einer druckluftbetätigten Nutzfahrzeugbremse. In einem Bremssattel 2 der Scheibenbremse, welcher die Bremsbeläge und den Bremssattel übergreift, ist eine Zuspanneinrichtung 3 angeordnet, deren Aufgabe die Verstärkung der durch ein Kraftglied erzeugten Bremskräfte ist. Bestandteile der Zuspanneinrichtung 3 sind unter anderem ein innen in dem Bremssattel 2 auf einer Schwenkachse A2 schwenkbar gelagerter Bremshebel 10, sowie ein in Richtung zu dem inneren, zuspannseitigen Bremsbelag der Scheibenbremse arbeitendes Druckstück in Gestalt einer sich über die Breite des Bremshebels 10 erstreckenden Traverse 8. Auf der Mitte der Traverse 8 ist ein Stempel befestigt, der sich gegen den inneren Bremsbelag der Scheibenbremse abstützt, und diesen gegen die Bremsscheibe 5 beaufschlagt.

Der Bremshebel 10 setzt sich zusammen aus einem kraftverstärkenden Hebelarm 12 und einer in zwei Längsabschnitte aufgeteilten Zuspannwelle 11. Die Zuspannwelle 11 ist mit ihrer Rückseite gegenüber dem Bremssattel 2 abgestützt. Diese Abstützung erfolgt über ein Schwenklager 15 mit der Schwenkachse A2. Vorzugsweise sind hierzu zwischen den beiden Längsabschnitten der Zuspannwelle 11 und jeweils einer Gegenfläche innen im Bremssattel 2 geeignete Lagerschalen angeordnet.

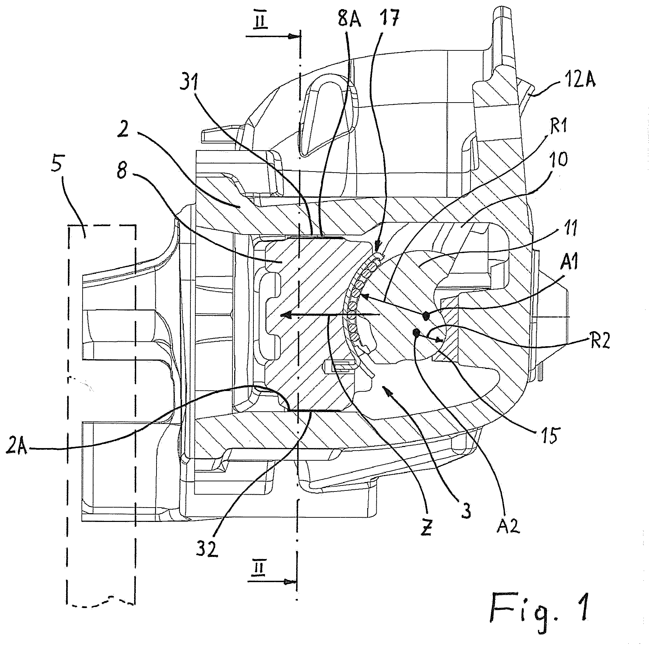

Nach vorne, also in Zuspannrichtung Z und damit zu den Bremsbelägen bzw. zu der in Fig. 1 nur gestrichelt eingezeichneten Bremsscheibe 5 hin, ist die Zuspannwelle 11 über ein weiteres Schwenklager 17 schwenkbar gegen die Traverse 8 abgestützt. Hierzu ist die Traverse 8 in diesem Bereich mit Mulden versehen, in denen sich die Lagerschalen des Schwenklagers 17 abstützen. Diese sind auf einem Radius R1 zu der geometrischen Schwenkachse A1 des weiteren Schwenklagers 17 angeordnet.

Die Zuspannwelle 11 ist exzentrisch gelagert. Denn die rückwärtigen, auf einem Radius R2 gegen den Bremssattel 2 abgestützten Lagerschalen 15 weisen eine in der Höhe versetzt angeordnete Schwenkachse A2 im Vergleich zu der Schwenkachse A1 des zwischen Zuspannwelle 11 und Traverse 8 angeordneten, weiteren Schwenklagers 17. Bei einem Verdrehen der Zuspannwelle 11 um die Achse A2, welche die Drehung gegenüber dem Bremssattel 2 definiert, kommt es daher zu einer Vorwärtsbewegung der Traverse 8 in Richtung zu der Bremsscheibe 5 der Scheibenbremse hin, wodurch die Bremse in Zuspannrichtung Z zugespannt wird mit der Folge, dass die beiden Stempel Bremsdruck auf die Bremsbeläge ausüben.

Zum Verdrehen der Zuspannwelle 11 dient der daran einstückig ausgebildete Hebelarm 12, dessen Schwenkmittellinie sich rechtwinklig zu der Zuspannwelle 11 erstreckt. Der Hebelarm 12 ist an seinem äußeren Ende 12A mit einer Abstützung versehen. Diese definiert einen Abstützpunkt, gegen den das Kraftglied der Scheibenbremse arbeitet. Bei druckluftbetätigten Scheibenbremsen ist dieses Kraftglied der Druckstößel eines pneumatischen Bremszylinders.

Bei dem hier beschriebenen erfindungsgemäßen Ausführungsbeispiel ist der Bremshebel 10 insgesamt gabelförmig gestaltet und er verzweigt sich, ausgehend von dem auf der Schwenkmittellinie angeordneten Hebelarm 12, in zwei Schenkel, von denen der eine Schenkel mit einem ersten Längsabschnitt der Zuspannwelle 11, und der zweite Schenkel mit einem zweiten Längsabschnitt der Zuspannwelle 11 verbunden ist. Der Bremshebel 10 weist daher in Verlängerung des Hebelarms 12 nach innen zwischen diesen beiden Längsabschnitten der Zuspannwelle 11 einen Freiraum auf.

Der so durch die Gabelform des Bremshebels 10 bedingte Freiraum sowie ferner das mit einer Gewindebohrung 21 versehene Zentrum der Traverse 8 bieten Platz für eine Nachstelleinrichtung 22, durch welche der im Laufe der Zeit auftretende Bremsverschleiß kompensiert und das Lüftspiel der Bremse korrigiert wird. Bestandteile der Nachstelleinrichtung 22 sind mindestens ein Antriebselement, ein das Lüftspiel der Bremse verringerndes Abtriebselement und, im Bewegungsweg zwischen Antriebselement und Abtriebselement, eine Einwegekupplung und ein Überlastglied. Als Abtriebselement der Nachstelleinrichtung 22 dient eine Spindel. Diese ist mit einem Außengewinde versehen, welches in die Gewindebohrung 21 im Zentrum der Traverse 8 eingeschraubt ist.

Die Bestandteile der Nachstelleinrichtung 22 sind auf einer gemeinsamen Nachstellachse L angeordnet. Die Nachstellachse L erstreckt sich durch den Freiraum des Bremshebels 10 und durch die Gewindebohrung 21 im Zentrum der Traverse 8 hindurch. Die Nachstellachse L erstreckt sich in Zuspannrichtung Z, und erstreckt sich im Wesentlichen senkrecht zu der Ebene, in der sich die Bremsscheibe 5 befindet. Die zentral in der Traverse 8 angeordnete Gewindebohrung 21 liegt, ebenso wie die Spindel, auf der Nachstellachse L.

Die Nachstellachse L kann so angeordnet sein, dass sie eine der zwei Dreh- bzw. Schwenkachsen A1, A2 des Bremshebels 10 kreuzt.

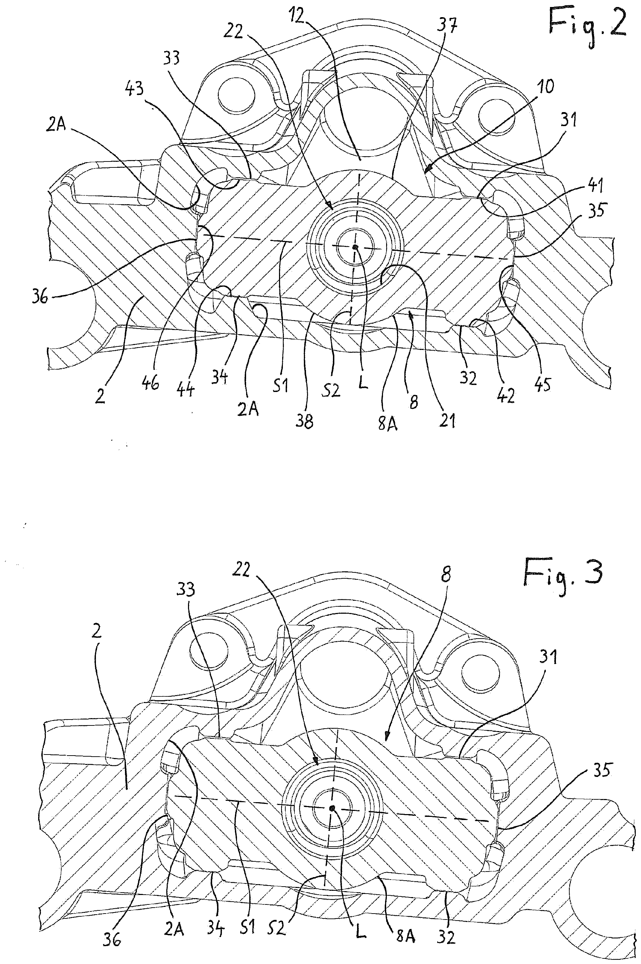

Gemäß Fig. 2 ist die Traverse 8 an ihrer in Zuspannrichtung Z betrachteten Außenkontur 8A mit mehreren ersten Außenflächen 31 - 36 versehen. Nur im Bereich dieser ersten Außenflächen ist die Traverse 8 an jeweils gegenüberliegenden Innenflächen 41 - 46 des Bremssattels 2 längsgeführt. Die Außenflächen 31 - 36 sind über die Umfangskontur der Traverse 8 verteilt angeordnet. Als Umfangskontur wird hier die in Zuspannrichtung betrachtete Außenkontur 8A der Traverse 8 bezeichnet.

Zu der Außenkontur 8A der Traverse gehören neben den ersten Außenflächen 31 - 36 zweite bzw. weitere Außenflächen 37, 38. Diese sind aber an der Führung der Traverse 8 nicht beteiligt, weshalb sie auch nicht in Kontakt mit gegenüberliegenden zweiten bzw. weiteren Innenflächen an der Innenkontur 2A des Bremssattels 2 stehen.

Die Außenkontur 8A der Traverse und entsprechend auch die die Traverse 8 umgebende Innenkontur 2A des Bremssattels 2 ist im Wesentlichen bestimmt durch eine erste Haupterstreckungsachse S1, die sich parallel zu der Schwenkachse A1 des Schwenklagers 17 zwischen Bremshebel 10 und Traverse 8 erstreckt, und durch eine dazu rechtwinklig angeordnete zweite Haupterstreckungsachse S2. Die beiden in Fig. 2 gestrichelt eingezeichneten Haupterstreckungsachsen S1, S2 kreuzen sich auf der Nachstellachse L. Die Nachstellachse L steht daher rechtwinklig sowohl auf der ersten S1, als auch auf der zweiten S2 Haupterstreckungsachse. Die Fig. 2 lässt außerdem erkennen, dass die Traverse 8 auf der zweiten Haupterstreckungsachse S2 eine geringere Ausdehnung aufweist, als auf der ersten Haupterstreckungsachse S1.

Alle Außenflächen 31 - 38 der Traverse sind jeweils paarweise, d. h. als Flächenpaare an der Außenkontur 8A der Traverse 8 ausgebildet, indem die eine Fläche des jeweiligen Flächenpaars auf der einen, und die andere Fläche auf der anderen Seite der dazwischen liegenden Haupterstreckungsachse S1, S2 angeordnet ist. Die Verbindungslinie zwischen den beiden ein Flächenpaar bildenden Außenflächen der Traverse kreuzt dabei rechtwinklig die zwischen ihnen liegende Haupterstreckungsachse S1, S2. Dies gilt insbesondere für die Führungszwecken dienenden Außenflächen 31 - 36, aber auch für die weiteren Außenflächen 37, 38.

Bei der in Fig. 2 wiedergegebenen erfindungsgemäßen Ausführungsform der Traverse 8 sind an deren Außenkontur 8A insgesamt sechs erste Außenflächen 31 - 36 mit der Funktion von Führungsflächen ausgebildet. Zwei mal zwei Flächen 31, 32, 33, 34 sind in Bezug auf die längere Haupterstreckungsachse S1 paarweise angeordnet. Zwei weitere Führungsflächen 35, 36 sind in Bezug auf die kürzere Haupterstreckungsachse S2 paarweise angeordnet.

Zumindest in einem Fall, nämlich hier hinsichtlich der beiden Flächen 31, 32, weisen diese nicht denselben, sondern einen unterschiedlich großen Abstand zu der zwischen ihnen angeordneten Haupterstreckungsachse, hier der längeren Haupterstreckungsachse S1, auf. Dadurch wird erreicht, dass sich die Traverse 8 nicht um 180° um die Nachstellachse L und damit um die Zuspannrichtung Z verdreht in den Bremssattel 2 einsetzen lässt. Bereits der Versuch, die Traverse 8 in einer solchen verdrehten Position in den Bremssattel 2 hineinzuschieben, würde sofort scheitern.

Die beiden Haupterstreckungsachsen S1, S2 teilen die Traverse 8, in Zuspannrichtung Z betrachtet, in vier Quadranten ein. Aus Sicht der ersten Außenflächen zeichnen sich gegenüberliegende Quadranten dadurch aus, dass dort eine zweite Führungsfläche einer ersten Führungsfläche gegenübersteht. Aus Sicht einer ersten Führungsfläche zeichnen sich seitliche Quadranten dadurch aus, dass dort eine zweite Führungsfläche der ersten seitlich nebengeordnet ist. Die Fehlmontage der Traverse 8 wird verhindert, indem der Abstand der Führungsflächen des Führungsflächenpaars 31, 32 größer oder kleiner ist, als der Abstand der Führungsflächen eines anderen Führungsflächenpaars 33, 34 in dem seitlich daneben angeordneten Quadranten. Dabei ist es möglich, dass die Führungsflächen der seitlich nebeneinander angeordneten Quadranten voneinander beabstandet sind oder auch nicht, und dass diese Führungsflächen im Falle der Nichtbeabstandung eine durchgehende Fläche bilden oder nur durch eine Stufe getrennt sind. Auch ist es denkbar, dass sich eine oder mehrere Führungsflächen über mehrere Quadranten bzw. Haupterstreckungsachsen S1, S2 erstrecken.

Bei der Bauform nach Fig. 3 besteht die Asymmetrie der Führungsflächen in einer zumindest bereichsweise unterschiedlichen Gestaltung der ein Führungsflächenpaar bildenden ersten Außenflächen 35 und 36 bzw. der entsprechenden Innenflächen 45, 46 am Bremssattel 2. Die beiden Flächen 35, 36 sind in Umfangsrichtung unterschiedlich breit gestaltet, zudem weisen sie nicht denselben, sondern einen unterschiedlich großen Abstand zu der zwischen ihnen angeordneten, kürzeren Haupterstreckungsachse S2 auf. Wiederum wird erreicht, dass sich die Traverse 8 nicht um 180° um die Nachstellachse L und damit um die Zuspannrichtung Z verdreht in den Bremssattel 2 einsetzen lässt.

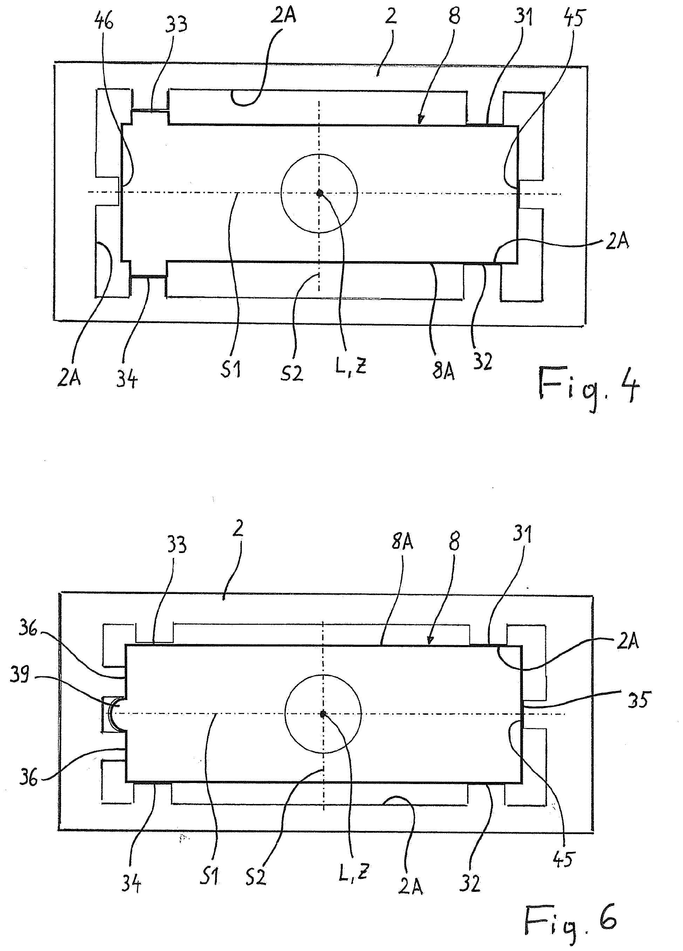

Bei der Bauform nach Fig. 4 sind Bestandteil der Außenkontur 8A der Traverse zwei Flächenpaare 31, 32; 33, 34, deren zwei Außenflächen zwar jeweils denselben Abstand zu der zwischen ihnen angeordneten Haupterstreckungsachse S1 aufweisen, wobei dieser Abstand jedoch bei dem ersten Flächenpaar 31, 32 anders als bei dem zweiten Flächenpaar 33, 34 ist. Die Flächenpaare 31, 32; 33, 34 sind außerdem zu unterschiedlichen Seiten der anderen, kürzeren Haupterstreckungsachse S2 angeordnet. Dabei weisen die Außenflächen 31, 32 des einen Flächenpaars denselben Abstand zu der Haupterstreckungsachse S2 auf wie die beiden Außenflächen 33, 34 des anderen Paars.

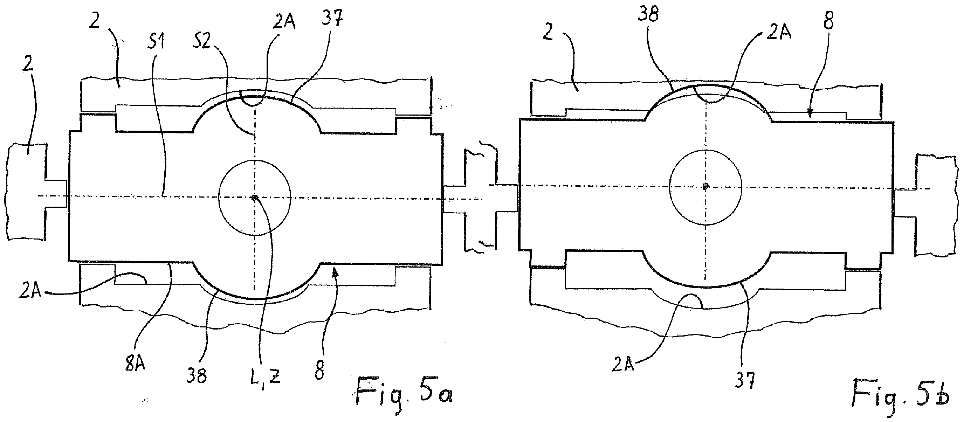

Auch bei der Bauform nach Fig. 5a und Fig. 5b befindet sich bei montierter Traverse 8, wie dies in Fig. 5a wiedergegeben ist, deren gesamte Außenkontur 8A überdeckungsfrei innerhalb der Innenkontur 2A des Bremssattels 2, wohingegen bei um 180° um die Zuspannrichtung Z verdrehter Traverse 8, wie dies in Fig. 5b wiedergegeben ist, die weitere Außenfläche 38 der Außenkontur 8A über die benachbarte Innenkontur 2A des Bremssattels nach außen übersteht. Der so überstehende Bereich ist in Fig. 5b schraffiert. Die Vermeidung des Fehleinbaus der Traverse 8 wird hier also nicht über die ersten Außenflächen der Traverse erreicht, welche gleichzeitig Führungsflächen sind, sondern über die zweiten bzw. weiteren Außenflächen 37, 38, welche an der eigentlichen Führung der Traverse 8 nicht beteiligt sind.

Bei der Bauform nach Fig. 6 sind die auf die längere Haupterstreckungsachse S1 bezogenen, ersten Außenflächen 31, 32, 33, 34 allesamt symmetrisch bezüglich der Haupterstreckungsachse S1. Eine Asymmetrie wird hier in Bezug auf die kürzere Haupterstreckungsachse S2 erzielt, indem die beiden funktional ein Flächenpaar bildenden Außenflächen 35, 36 der Außenkontur 8A unterschiedlich gestaltet sind. Die Außenfläche 35 ist als Führungsfläche für die Traverse ausgebildet. Die in Bezug auf die kürzere Haupterstreckungsachse S2 gegenüberliegende Außenfläche 36 ist zweigeteilt. Dazwischen befindet sich ein Freiraum, in dem ein an dieser Seite der Traverse 8 ausgebildeter Vorsprung 39 Platz findet. Würde die Traverse 8 um 180° um die Zuspannrichtung Z verdreht in die Innenkontur 2A des Bremssattels 2 eingebaut, würde dieser Vorsprung 39 gegen die Innenfläche 45 an der Innenkontur 2A des Bremssattels 2 stoßen. Bereits der Versuch, die Traverse 8 in einer solchen verdrehten Position in den Bremssattel 2 hineinzuschieben, würde scheitern.

Für das beschriebene erfindungsgemäße Ausführungsbeispiel sowie für die weiteren Bauformen gilt, dass die durch die Außenflächen und Innenflächen erzielte Verschlüsselung in axialer Montagerichtung, also in Richtung der Nachstellachse L, den an der Führungsfunktion beteiligten Flächen vorgelagert ist. Bei dem Versuch einer Fehlmontage der Traverse 8 kommt es daher gar nicht erst zu einem Kontakt mit dem an der Innenkontur 2A des Bremssattels 2 ausgebildeten Gegenflächen.

### Bezugszeichenliste

- 2: Bremssattel
- 2A: Innenkontur am Bremssattel
- 3: Zuspanneinrichtung
- 5: Bremsscheibe
- 8: Traverse
- 8A: Außenkontur der Traverse
- 10: Bremshebel
- 11: Zuspannwelle
- 12: Hebelarm
- 12A: äußeres Ende des Hebelarms
- 15: Schwenklager
- 17: Schwenklager
- 21: Gewindebohrung
- 22: Nachstelleinrichtung
- 31: Außenfläche
- 32: Außenfläche
- 33: Außenfläche
- 34: Außenfläche
- 35: Außenfläche
- 36: Außenfläche
- 37: Außenfläche
- 38: Außenfläche
- 39: Vorsprung
- 41: Innenfläche
- 42: Innenfläche
- 43: Innenfläche
- 44: Innenfläche
- 45: Innenfläche
- 46: Innenfläche

- A1: Schwenkachse
- A2: Schwenkachse
- L: Nachstellachse, Richtung der Zuspannung
- R1: Radius
- R2: Radius
- S1: längere Haupterstreckungsachse der Traverse
- S2: kürzere Haupterstreckungsachse der Traverse
- Z: Zuspannrichtung

## Patentansprüche

1. Scheibenbremse mit einem eine Bremsscheibe (5) und Bremsbeläge zu beiden Seiten der Bremsscheibe übergreifenden Bremssattel (2) und einer in dem Bremssattel (2) angeordneten Zuspanneinrichtung aus einem durch ein Kraftglied antreibbaren Bremshebel (10), einer zu dem zuspannseitigen Bremsbelag hin arbeitenden, innen in dem Bremssattel (2) geführten Traverse (8), und einem Schwenklager (17) zwischen dem Bremshebel (10) und der Traverse (8), wobei die Traverse (8) in Zuspannrichtung (Z) betrachtet eine Außenkontur (8A) aus Außenflächen (31 - 36), mit denen die Traverse in dem Bremssattel (2) geführt ist, und weiteren Außenflächen aufweist, und der Bremssattel (2) in Zuspannrichtung (Z) betrachtet eine Innenkontur (2A) aus Innenflächen (41 - 46), an denen die Traverse geführt ist, und weiteren Innenflächen aufweist, wobei die Außenkontur (8A) der Traverse (8) und die Innenkontur (2A) des Bremssattels (2) bestimmt sind durch eine parallel zu der Achse (A1) des Schwenklagers (17) angeordnete erste Haupterstreckungsachse (S1) und eine zu dieser rechtwinklig angeordnete zweite Haupterstreckungsachse (S2), wobei die geführten Außenflächen (31 - 36) paarweise an der Außenkontur (8A) vorhanden sind, indem eine Fläche (31, 33, 35) auf der einen, und die jeweils andere Fläche (32, 34, 36) auf der anderen Seite der Haupterstreckungsachse (S1, S2) angeordnet ist, und wobei sich bei montierter Traverse (8) deren gesamte Außenkontur (8A) überdeckungsfrei innerhalb der Innenkontur (2A) des Bremssattels (2) befindet, hingegen bei um 180° um die Zuspannrichtung (Z) verdrehter Traverse (8) zumindest eine Außenfläche der Außenkontur (8A) über die Innenkontur (2A) nach außen vorsteht, **dadurch gekennzeichnet, dass** nur bei einem Flächenpaar der geführten Außenflächen dessen beide Außenflächen (31, 32) einen unterschiedlichen Abstand zu der zwischen ihnen angeordneten Haupterstreckungsachse (S1) aufweisen.

2. Scheibenbremse nach Anspruch 1, **dadurch gekennzeichnet, dass** die Traverse (8) in Richtung der ersten Haupterstreckungsachse (S1) eine größere Ausdehnung aufweist, als in Richtung der zweiten Haupterstreckungsachse (S2).

3. Scheibenbremse nach Anspruch 1, **dadurch gekennzeichnet, dass** die beiden einen unterschiedlichen Abstand zu der Haupterstreckungsachse (S1) aufweisenden Außenflächen (31, 32) zu der Gruppe der die Traverse (8) in dem Bremssattel (2) führenden Außenflächen (31 - 36) gehören.

4. Scheibenbremse nach Anspruch 1, **dadurch gekennzeichnet, dass** die über die Innenkontur (2A) nach außen vorstehende Außenfläche der Außenkontur (8A) zu der Gruppe der die Traverse (8) in dem Bremssattel (2) führenden Außenflächen (31 - 36) gehört.

5. Scheibenbremse nach einem der Ansprüche 1 - 4, **gekennzeichnet durch** eine in dem Bremssattel (2) angeordnete Nachstelleinrichtung (22) zum Ausgleich des Lüftspiels zwischen den Bremsbelägen und der Bremsscheibe (5), wobei die Bestandteile der Nachstelleinrichtung (22) auf einer Nachstellachse (L) angeordnet sind, welche rechtwinklig sowohl auf der ersten Haupterstreckungsachse (S1) als auch auf der zweiten Haupterstreckungsachse (S2) steht.

6. Traverse als innen in einem Bremssattel einer Scheibenbremse geführtes Bauteil einer Zuspanneinrichtung, welches einerseits zu einem zuspannseitigen Bremsbelag der Scheibenbremse hin arbeitet, und andererseits mit Mulden zur Abstützung von Lagerschalen eines Schwenklagers (17) der Zuspanneinrichtung versehen ist, wobei die Traverse (8) in Zuspannrichtung (Z) betrachtet eine Außenkontur (8A) aus Außenflächen (31 - 36), mit denen die Traverse in dem Bremssattel (2) geführt ist, und weiteren Außenflächen aufweist, wobei die Außenkontur (8A) der Traverse (8) bestimmt ist durch eine parallel zu der Achse (A1) des Schwenklagers (17) angeordnete erste Haupterstreckungsachse (S1) und eine zu dieser rechtwinklig angeordnete zweite Haupterstreckungsachse (S2), wobei die geführten Außenflächen (31 - 36) paarweise an der Außenkontur (8A) vorhanden sind, indem eine Fläche (31, 33, 35) auf der einen, und die jeweils andere Fläche (32, 34, 36) auf der anderen Seite der Haupterstreckungsachse (S1, S2) angeordnet ist, **dadurch gekennzeichnet, dass** nur bei einem Flächenpaar der geführten Außenflächen dessen beiden Außenflächen (31, 32) einen unterschiedlichen Abstand zu der zwischen ihnen angeordneten Haupterstreckungsachse (S1) aufweisen.

7. Traverse nach Anspruch 6, **dadurch gekennzeichnet, dass** diese in ihrem Zentrum mit einer Gewindebohrung (21) versehen ist, die auf einer Nachstellachse (L) liegt, welche rechtwinklig sowohl auf der ersten Haupterstreckungsachse (S1), als auch auf der zweiten Haupterstreckungsachse (S2) steht.

## Claims

1. Disc brake with a brake caliper (2) overlapping a brake disc (5) and brake linings on both sides of the brake disc, and with a clamping device which is arranged in the brake caliper (2) and consists of a brake lever (10) which can be driven by a force element, and with a cross-member (8) which operates towards the brake lining on the clamping side and is guided internally in the brake caliper (2), and with a pivot bearing (17) between the brake lever (10) and the cross-member (8), wherein when viewed in the clamping direction the cross-member (8) has an external contour (8A) consisting of outer surfaces (31 - 36) by which the cross-member is guided in the brake caliper (2), and has further outer surfaces, and when viewed in the clamping direction the brake caliper (2) has an internal contour (2A) consisting of inner surfaces (41 - 46) on which the cross-member is guided, and has further inner surfaces, wherein the external contour (8A) of the cross-member (8) and the internal contour (2A) of the brake caliper (2) are determined by a first main axis of extension (S1) arranged parallel to the axis (A1) of the pivot bearing (17) and a second main axis of extension (S2) arranged at right angles thereto, wherein the guided outer surfaces (31 - 36) are present in pairs on the external contour (8A), wherein one surface (31, 33, 35) is arranged on one side and the respective other surface (32, 34, 36) is arranged on the other side of the main axis of extension (S1, S2), and wherein when the cross-member (8) is fitted the entire external contour (8A) is located without overlap inside the internal contour (2A) of the brake caliper (2) but, on the other hand, when the cross-member (8) is rotated by 180° about the clamping direction (Z) at least one outer surface of the external contour (8A) projects outwards over the internal contour (2A). **characterised in that** only in the case of a pair of surfaces of the guided outer surfaces, the two outer surfaces (31, 32) thereof have a different spacing relative to the main axis of extension (S1) arranged between them.

2. Disc brake according to claim 1, **characterised in that** the cross-member (8) has a greater dimension in the direction of the first main axis of extension (S1) than in the direction of the second main axis of extension (S2).

3. Disc brake according to claim 1, **characterised in that** the two outer surfaces (31, 32) which have a different spacing relative to the main axis of extension (S1) belong to the group of outer surfaces (31 - 36) which guide the cross-member (8) in the brake caliper (2).

4. Disc brake according to claim 1, **characterised in that** the outer surface of the external contour (8A) projecting over the internal contour (2A) belongs to the group of outer surfaces (31 - 36) which guide the cross-member (8) in the brake caliper (2).

5. Disc brake according to one of claims 1 - 4, **characterised by** a readjusting device (22) arranged in the brake caliper (2) to compensate for the clearance between the brake linings and the brake disc (5), wherein the components of the readjusting device (22) are arranged on a readjustment axis (L) which is at right angles both to the first main axis of extension (S1) and also to the second main axis of extension (S2).

6. Cross-member as a component of a clamping device which is guided internally in a brake caliper of a disc brake and which on the one hand works towards a brake lining of the disc brake on the clamping side, and on the other hand is provided with depressions for supporting bearing shells of a pivot bearing (17) of the clamping device, wherein when viewed in the clamping direction the cross-member (8) has an external contour (8A) consisting of outer surfaces (31 - 36) by which the cross-member is guided in the brake caliper (2), and has further outer surfaces, wherein the external contour (8A) of the cross-member (8) is determined by a first main axis of extension (S1) arranged parallel to the axis (A1) of the pivot bearing (17) and a second main axis of extension (S2) arranged at right angles thereto, wherein the guided outer surfaces (31 - 36) are present in pairs on the external contour (8A), wherein one surface (31,33, 35, 35) is arranged on one side and the respective other surface (32, 34, 36) is arranged on the other side of the main axis of extension (S1, S2), **characterised in that** only in the case of a pair of surfaces of the guided outer surfaces, the two outer surfaces (31, 32) thereof have a different spacing relative to the main axis of extension (S1) arranged between them.

7. Cross-member according to claim 6, **characterised in that** it is provided in its centre with a threaded bore (21) located on a readjustment axis (L) which is at right angles both to the first main axis of extension (S1) and also to the second main axis of extension (S2).

## Revendications

1. Frein à disque avec un étrier de frein (2) recouvrant un disque de frein (5) et des plaquettes de frein des deux côtés du disque de frein et avec un dispositif de serrage, disposé dans l'étrier de frein (2), composé d'un levier de frein (10) pouvant être entraîné par un organe de force, avec une traverse (8) travaillant en direction de la plaquette de frein côté serrage et guidée à l'intérieur dans l'étrier de frein (2), et avec un support pivotant (17) entre le levier de frein (10) et la traverse (8), la traverse (8) présentant, vu dans la direction de serrage (Z), un contour extérieur (8A) composé de surfaces extérieures (31 - 36), avec lesquelles la traverse est guidée dans l'étrier de frein (2), et d'autres surfaces extérieures, et l'étrier de frein (2) présentant, vu dans la direction de serrage (Z), un contour intérieur (2A) composé de surfaces intérieures (41 - 46), sur lesquelles la traverse est guidée, et d'autres surfaces intérieures, le contour extérieur (8A) de la traverse (8) et le contour intérieur (2A) de l'étrier de frein (2) étant définis par un premier axe d'étendue principal (S1) disposé parallèlement à l'axe (A1) du support pivotant (17) et par un deuxième axe d'étendue principal (S2) disposé à angle droit par rapport au premier axe d'étendue principal, les surfaces extérieures (31 - 36) guidées étant présentes par paires sur le contour extérieur (8A) par le fait qu'une surface (31, 33, 35) est disposée sur un côté de l'axe d'étendue principal (S1, S2) et l'autre surface respective (32, 34, 36) est disposée sur l'autre côté de l'axe d'étendue principal (S1, S2), et la totalité du contour extérieur (8A) de la traverse (8), quand celle-ci est montée, se trouvant sans recouvrement à l'intérieur du contour intérieur (2A) de l'étrier de frein (2), alors que, quand la traverse (8) est tournée de 180° autour de la direction de serrage (Z), au moins une surface extérieure du contour extérieur (8A) dépasse vers l'extérieur au-delà du contour intérieur (2A), **caractérisé en ce que,** seulement pour une paire de surfaces des surfaces extérieures guidées, les deux surfaces extérieures (31, 32) de cette paire présentent une distance différente par rapport à l'axe d'étendue principal (S1) disposé entre elles.

2. Frein à disque selon la revendication 1, **caractérisé en ce que**, en direction du premier axe d'étendue principal (S1), la traverse (8) présente une extension plus importante qu'en direction du deuxième axe d'étendue principal (S2).

3. Frein à disque selon la revendication 1, **caractérisé en ce que** les deux surfaces extérieures (31, 32) présentant une distance différente par rapport à l'axe d'étendue principal (S1) font partie du groupe des surfaces extérieures (31 - 36) guidant la traverse (8) dans l'étrier de frein (2).

4. Frein à disque selon la revendication 1, **caractérisé en ce que** la surface extérieure du contour extérieur (8A) dépassant vers l'extérieur au-delà du contour intérieur (2A) fait partie du groupe des surfaces extérieures (31 - 36) guidant la traverse (8) dans l'étrier de frein (2).

5. Frein à disque selon l'une des revendications 1 - 4, **caractérisé par** un dispositif de réglage (22), disposé dans l'étrier de frein (2), destiné à compenser le jeu entre les plaquettes de frein et le disque de frein (5), les composants du dispositif de réglage (22) étant disposés sur un axe de réglage (L) qui est à angle droit aussi bien sur le premier axe d'étendue principal (S1) que sur le deuxième axe d'étendue principal (S2).

6. Traverse en tant qu'élément d'un dispositif de serrage guidé intérieurement dans un étrier d'un frein à disque, lequel élément travaille d'une part en direction d'une plaquette de frein, côté serrage, du frein à disque et, d'autre part, est muni de cuvettes destinées au support de coussinets de palier d'un support pivotant (17) du dispositif de serrage, la traverse (8) présentant, vu dans la direction de serrage (Z), un contour extérieur (8A) composé de surfaces extérieures (31 - 36), avec lesquelles la traverse est guidée dans l'étrier de frein (2), et d'autres surfaces extérieures, le contour extérieur (8A) de la traverse (8) étant défini par un premier axe d'étendue principal (S1) disposé parallèlement à l'axe (A1) du support pivotant (17) et par un deuxième axe d'étendue principal (S2) disposé à angle droit par rapport au premier axe d'étendue principal, les surfaces extérieures (31 - 36) guidées étant présentes par paires sur le contour extérieur (8A) par le fait qu'une surface (31, 33, 35) est disposée sur un côté de l'axe d'étendue principal (S1, S2) et l'autre surface respective (32, 34, 36) est disposée sur l'autre côté de l'axe d'étendue principal (S1, S2), **caractérisée en ce que** seulement pour une paire de surfaces des surfaces extérieures guidées, les deux surfaces extérieures (31, 32) de cette paire présentent une distance différente par rapport à l'axe d'étendue principal (S1) disposé entre elles.

7. Traverse selon la revendication 6, **caractérisée en ce que**, en son centre, celle-ci est munie d'un alésage fileté (21) qui est situé sur un axe de réglage (L) qui est à angle droit aussi bien sur le premier axe d'étendue principal (S1) que sur le deuxième axe d'étendue principal (S2).
